# EUROPÄISCHE PATENTSCHRIFT

(11) **EP 1 230 583 B1**
(45) Veröffentlichungstag und Bekanntmachung des Hinweises auf die Patenterteilung: **17.03.2004**
(21) Anmeldenummer: 00987105.4
(22) Anmeldetag: 09.11.2000
(51) Int. Cl.: G05B 19/409, G05B 23/02, G05B 19/418

(54) **SYSTEM UND VERFAHREN ZUR OBJEKTORIENTIERTEN MARKIERUNG UND ZUORDNUNG VON INFORMATION ZU SELEKTIERTEN TECHNOLOGISCHEN KOMPONENTEN**
SYSTEM AND METHOD FOR OBJECT-ORIENTED MARKING AND ORGANISING OF INFORMATION ABOUT SELECTED TECHNOLOGICAL COMPONENTS
SYSTEME ET PROCEDE DE MARQUAGE ORIENTE OBJET ET D'AFFECTION D'INFORMATION A DES COMPOSANTS TECHNOLOGIQUES SELECTIONNES

(30) Priorität: 09.11.1999 DE 19953739
(43) Veröffentlichungstag der Anmeldung: 14.08.2002
(73) Patentinhaber: SIEMENS AKTIENGESELLSCHAFT, 80333 München (DE)
(72) Erfinder: FRIEDRICH, Wolfgang, 91088 Bubenreuth (DE); WOHLGEMUTH, Wolfgang, 91058 Erlangen (DE)
(86) Internationale Anmeldenummer: PCT/DE2000/003942
(87) Internationale Veröffentlichungsnummer: WO 2001/035178

(56) Entgegenhaltungen:
- EP-A- 0 597 127
- WO-A-98/50834
- US-A- 5 745 387
- US-A- 5 850 352
- DAUDE R ET AL: "HEAD-MOUNTED DISPLAY ALS FACHARBEITERORIENTIERTE UNTERSTUETZUNGSKOMPONENTE AN CNC-WERKZEUGMASCHINEN" WERKSTATTSTECHNIK,DE,SPRINGER VERLAG. BERLIN, Bd. 86, Nr. 5, 1. Mai 1996 (1996-05-01), Seiten 248-252, XP000585192 ISSN: 0340-4544
- KUZUOKA H: "SPATIAL WORKSPACE COLLABORATION: A SHAREVIEW VIDEO SUPPORT SYSTEM FOR REMOTE COLLABORATION CAPABILITY" PROCEEDINGS OF THE CONFERENCE ON HUMAN FACTORS IN COMPUTING SYSTEMS,US,READING, ADDISON WESLEY, Bd. -, 3. Mai 1992 (1992-05-03), Seiten 533-540, XP000426833
- STOKER C R ET AL: "ANTARCTIC UNDERSEA EXPLORATION USING A ROBOTIC SUBMARINE WITH A TELEPRESENCE USER INTERFACE" IEEE EXPERT,US,IEEE INC. NEW YORK, Bd. 10, Nr. 6, 1. Dezember 1995 (1995-12-01), Seiten 14-23, XP000539881 ISSN: 0885-9000
- ITO S ET AL: "HUMAN ORIENTED OPERATION GUIDE FOR SUBSTATIONS" PROCEEDINGS OF THE INTERNATIONAL CONFERENCE ON SYSTEMS, MAN, AND CYBERNETICS,US,NEW YORK, IEEE, Bd. -, 2. Oktober 1994 (1994-10-02), Seiten 1104-1109, XP000531218 ISBN: 0-7803-2130-8
- JOHNSON D: "SCADA SOFTWARE RAISES THE STAKES" CONTROL ENGINEERING INTERNATIONAL,US,CAHNERS PUBLISHING, Bd. 43, Nr. 14, 1. Oktober 1996 (1996-10-01), Seiten 80-82,84,86, XP000682154 ISSN: 0010-8049

## Beschreibung

Die Erfindung betrifft ein System und ein Verfahren zur objektorientierten Markierung und Zuordnung von Information zu selektierten technologischen Komponenten.

Ein derartiges System und Verfahren kommt beispielsweise im Bereich der Automatisierungstechnik, bei Produktions- und Werkzeugmaschinen, bei Diagnose-/Serviceunterstützungssystemen sowie für komplexe Komponenten, Geräte und Systeme, wie beispielsweise Fahrzeuge und industrielle Maschinen und Anlagen zum Einsatz.

Im Fachartikel Daude, R. et al:"Head-Mounted Display als facharbeiterorientierte Unterstützungskomponente an CNC-Werkzeugmaschinen", Werkstattstechnik, DE, Springer Verlag, Berlin, Bd. 86, Nr. 5, 1. Mai 1996, Seiten 248-252, XP000585192 ISSN:0340-4544, wird mit dem Head-Mounted Display (HMD) eine Komponente zur Unterstützung des Facharbeiters beim Einrichten, Einfahren und Störungsmanagement bei der Fräsbearbeitung beschrieben. Die technische Anbindung des HMD an eine moderne NC-Steuerung wird erläutert und die Ergebnisse eines Laborversuchs mit dem HMD werden genannt.

Aus dem Fachartikel Kuzuoka, H.:"Spatial Workspace Collaboration: A Sharedview Video Support System for Remote Collaboration Capability", Proceedings of the Conference on Human Factors in Computing Systems, US, Reading, Addison Wesley, 3. Mai 1992, Seiten 533-540, XP000426833, ist ein System zur Unterstützung eines Facharbeiters an einem räumlich ausgedehnten Arbeitsplatz bekannt. Mit einem Head-Mounted Display (HMD) und einer am Kopf des Facharbeiters befestigten Kamera erhalten der Facharbeiter und ein entfernter Experte identische Bildinformationen. Auf der Basis dieser Bildinformationen gibt der Experte dem Facharbeiter Unterstützung.

Der Fachartikel Stoker, C. et al:"Antarctic Undersea Exploration Using a Robotic Submarine with a Telepresence User Interface", IEEE Expert, US, IEEE Inc. New York, Bd. 10, Nr. 6, 1. Dezember 1995, Seiten 14-23, XP000539881 ISSN:0885-9000, beschreibt ein Virtual Reality-System zur Steuerung eines weit entfernten Unterwasserroboters. Der Anwender des Systems sieht mittels eines Head-Mounted Displays computergenerierte Grafiken, welche auf von einer am Roboter installierten Kamera aufgenommenen Bilddaten basieren. Der Anwender kann durch Kopfbewegungen die Ausrichtung der Kamera steuern.

Der Erfindung liegt die Aufgabe zugrunde, ein System und ein Verfahren anzugeben, das in konkreten Arbeitssituationen einen schnellen und sicheren Zugriff auf relevante Dokumentationsdaten ermöglicht.

Diese Aufgabe wird durch ein System sowie durch ein Verfahren mit den in den Ansprüchen 1 bzw. 4 angegebenen Merkmalen gelöst.

Bei den Dokumentationsdaten kann es sich.beispielsweise um bei der Errichtung einer Anlage oder eines Automatisierungssystems erstellte und gesammelte Daten und/oder auch im Betrieb einer Anlage oder eines Automatisierungssystems nach vorgebbaren Kriterien gepflegte und jeweils aktualisierte Dokumentationsdaten handeln. Diese Dokumentationsdaten können auf Speichermittel gespeichert sein, die sowohl lokal, d.h. am Ort der jeweiligen Anwendung oder auch an jeden beliebig anderen Ort, beispielsweise am Ort der jeweiligen Herstellerfirmen der einzelnen Anlagenkomponenten, gespeichert werden. Mit Hilfe der Erfassungsmittel werden beispielsweise aus einem Bildinhalt die realen Informationen erfaßt und über die Auswertemittel ausgewertet, so daß eine Zuordnung der realen Objekte zu in den Dokumentationsdaten gespeicherten Objektdaten möglich wird. Anhand der realen Informationsdaten, beispielsweise in Form eines detektierten Objekts werden dann insbesondere automatisch die zusätzlichen in dem Dokumentationsdaten enthaltenen Objektdaten ausgewählt und beispielsweise für Servicezwecke vor Ort zur Verfügung gestellt. Hierdurch wird ein situationsgerechter schneller Zugang zu den jeweils benötigten Daten ermöglicht.

Ein für den Anwender sehr benutzerfreundliche Möglichkeit zur Markierung von Objekten besteht darin, daß die Mittel zur virtuelle Markierung durch Sprachsteuerung und/oder durch digitale Bildverarbeitung angesteuert werden. Der Anwender kann dabei beispielsweise ein bestimmtes Objekt betrachten, wodurch auch die Kamera eines AR-Systems (= Augmented-Reality-Systems) das Objekt aufnimmt. Durch digitale Bildauswertung wird das so selektierte Objekt lokalisiert und kann virtuell markiert werden. Zusätzlich oder auch unabhängig von einer Bildauswertung kann das zu selektierende und zu markierende Objekt durch Auswertung von Sprachbefehlen des Anwenders detektiert werden.

Eine "globale" Anwendung des Systems unabhängig vom jeweiligen Standort des Anwenders vor Ort kann dadurch erreicht werden, daß das System am Ort des Anwenders ein Augmented-Reality-System aufweist, das über eine Datenverbindung mit einem entfernten Experten und/oder einem entfernten Expertensystem zur Hinübertragung der Markierung und/oder zur Rückübertragung von Zusatzinformationen, die im Zusammenhang mit der durch die virtuelle Markierung selektierten technologischen Komponente stehen, verbindbar ist. So kann die vor Ort erstellte Markierung des Objekts an einen entfernten Experten übertragen werden, der dann gezielt Zusatzinformationen zu dem jeweils markierten Objekt an den Anwender vor Ort übermitteln kann.

Weitere vorteilhafte Ausgestaltungen bestehen darin, daß die Dokumentationsdaten statische und/oder dynamische Informationsdaten sind. Beispiele für derartige statische Informationen sind technische Daten aus Handbüchern, Explosionszeichnungen, Wartungsanweisungen etc.. Beispiele für dynamische Informationen sind Prozeßwerte wie Temperatur, Druck etc.

Ein schneller situationsgerechter Zugang zu den Dokumentationsdaten wird dadurch weiter unterstützt, daß die Erfassungsmittel eine Bildaufnahmevorrichtung aufweisen, daß die Auswertemittel zur Auswertung der realen Information in der Weise vorgesehen sind, daß aus der realen Information ein Eisatzkontext, insbesondere ein Objekt der Dokumentationsdaten ermittelt wird und daß das System Visualisierungsmittel zur Visualisierung der Dokumentationsdaten aufweist.

Ein schneller situationsgerechter Zugang zu den Dokumentationsdaten wird dadurch weiter unterstützt, daß die Erfassungsmittel anwendergesteuert sind und insbesondere als sprachgesteuerte Erfassungsmittel und/oder durch Steuerdaten gesteuerte Erfassungsmittel ausgebildet sind.

Ein für viele Anwendungsfälle optimaler Einsatz von Augmented-Reality-Techniken auf Basis der statischen und/oder dynamischen Dokumentations- und/oder Prozeßdaten kann in der Weise erfolgen, daß die Erfassungsmittel und/oder die Visualisierungsmittel als Datenbrille ausgebildet sind.

Im folgenden wird die Erfindung anhand der in den Figuren dargestellten Ausführungsbeispiele näher beschrieben und erläutert.

Es zeigen:
- FIG 1: ein Blockschaltbild eines Ausführungsbeispiels eines Systems zur Dokumentationsverarbeitung,
- FIG 2: ein Blockschaltbild eines Ausführungsbeispiels eines Systems zur Dokumentationsverarbeitung,
- FIG 3: ein weiteres Blockschaltbild eines Ausführungsbeispiels eines Systems zur Dokumentationsverarbeitung,
- FIG 4: ein Anwendungsbeispiel für einen situationsgerechten Zugriff auf Dokumentationsdaten,
- FIG 5: eine erste Situationsdarstellung mit Problemstellung und Arbeitssituation eines Anwendungsbeispiels zur objektorientierten Markierung und Zuordnung von Information zu selektierten technologischen Komponenten,
- FIG 6: eine zweite Situationsdarstellung des Anwendungsbeispiels von Fig. 5 mit situationsabhängiger Augmentierung,
- FIG 7: eine dritte Situationsdarstellung des Anwendungsbeispiels von Fig.5,
- FIG 8: eine vierte Situationsdarstellung zur objektorientierten Markierung und Zuordnung von Information mittels sprachbasierter Interaktion,
- FIG 9: eine fünfte Situationsdarstellung zur objektorientierten Markierung und Zuordnung von Information,
- FIG 10: eine sechste Situationsdarstellung zur objektorientierten Markierung und Zuordnung von Information,
- FIG 11: eine siebte Situationsdarstellung zur objektorientierten Markierung und Zuordnung von Information und
- FIG 12: eine achte Situationsdarstellung zur objektorientierten Markierung und Zuordnung von Information.

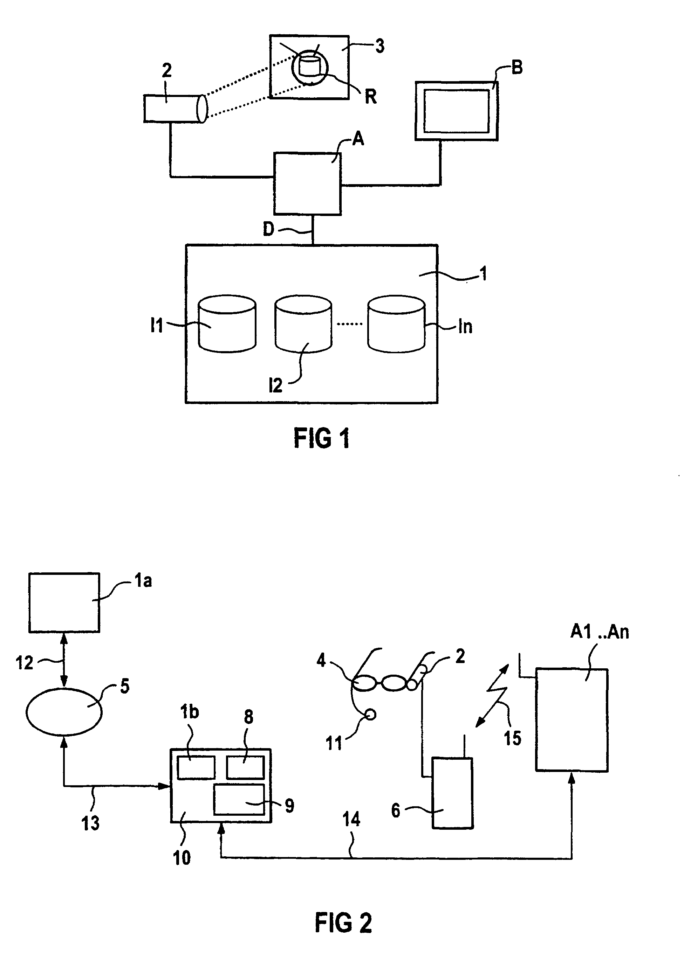

Figur 1 zeigt eine Prinzipdarstellung eines Systems zur Dokumentationsverarbeitung unter Zuhilfenahme von Augmented-Reality-Techniken. Das System besteht aus Auswertemitteln A, an die Erfassungsmittel 2 sowie Visualisierungsmittel B angeschlossen sind. Über eine Datenverbindung D sind die Auswertemittel A mit Speichermitteln 1 koppelbar. Die Speichermittel 1 enthalten Informationen I1..In als Dokumentationsdaten. Die Erfassungsmittel 2 dienen der Erfassung realer Informationen R eines Prozesses 3, beispielsweise eines Automatisierungssystems.

Figur 1 bildet die Grundstruktur eines Systems zur situationsgerechten Dokumentationsverarbeitung für technische und industrielle Anwendungen. Mit Hilfe der Erfassungsmittel 2, beispielsweise einer Videokamera werden reale Informationen der technischen und industriellen Anwendung 3 erfaßt und mit Hilfe der Auswertemittel A, beispielsweise der digitalen Bildverarbeitungsmitteln analysiert und ausgewertet. Die Auswertung der realen Informationen R mit Hilfe der Auswertemittel A erfolgt beispielsweise dahingehend, einzelne Objekte, d.h. einzelne Komponenten eines Automatisierungssystems oder einer industriellen Anwendung zu detektieren. Diese Detektion kann beispielsweise in Form von an den realen Objekten angebrachten Zusatzinformationen, beispielsweise in Form Bare-Code-Aufklebern erfolgen oder durch Vergleich der Bildinformationen mit in den Auswertemitteln A und/oder den Dokumentationsdaten 1 gespeicherten Vergleichsdaten. Nach Ermittlung eines gewünschten Objekts, welches mit der realen Information R korrespondiert, werden entweder automatisch und/oder interaktiv vom Anwender gesteuert die Dokumentationsdaten I1..In einem Anwender mit Hilfe der Visualisierungsmittel B angezeigt. Diese Dokumentationsdaten I1..In bilden eine Zusatzinformation für eine situationsgerechte und zur Unterstützung bei der Reparatur, bei der Wartung, etc.. Abhängig von der realen Information werden jeweils die benötigten Dokumentationsdaten situationsgerecht präsentiert. Die Dokumentationsdaten I1..In können dabei entweder vor Ort, beispielsweise auf einer Datenverarbeitungsvorrichtung oder auch an entfernten Orten gespeichert sein, wobei in diesem Fall ein Zugriff beispielsweise über eine Internet-Anbindung erfolgt.

Figur 2 zeigt eine Prinzipdarstellung eines Systems zur Dokumentationsverarbeitung für eine situationsgerechte Unterstützung der Interaktion zwischen einem Anwender und Automatisierungseinrichtungen A1..An. Der Anwender, der in Figur 2 nicht explizit dargestellt ist, ist mit mobilen Geräten 4, 6 ausgestattet. Die mobilen Geräte 4, 6 beinhalten eine Datenbrille 4, an der ein Videokamera 2 sowie ein Mikrofon 11 angeordnet ist. Die Datenbrille ist mit einer Funk-Sende-Empfangsvorrichtung 6 gekoppelt, die über eine Funkschnittstelle 15 mit dem Automatisierungssystem A1..An kommunizieren kann. Das Automatisierungssystem A1..An ist über eine Datenverbindung 14 mit einem Augmented-Reality-System 10 koppelbar, welches im folgenden auch abkürzend als AR-System bezeichnet wird. Das AR-System enthält ein Informationsmodul 1b zur Speicherung von Informationsdaten, ein AR-Basismodul 8 sowie ein AR-Anwendungsmodul 9. Das AR-System 10 ist über eine Datenverbindung 13 mit dem Internet 5 verbindbar, wobei über eine beispielhaft dargestellte Internetverbindung 12 ein Zugriff auf weitere Speicher- und Dokumentationsdaten 1a möglich ist.

Der Anwender, der mit der Datenbrille 4 und der mobilen Funk-Sende-Einrichtung 7 ausgestattet ist, ist in der Lage, sich für Wartungs- und Servicezwecke in der Anlage A1..An frei zu bewegen. Ist beispielsweise die Wartung oder Reparatur einer bestimmten Teilkomponente der Anlage A1..An erforderlich, so wird mit Hilfe der Kamera 2 der Datenbrille 4 gegebenenfalls gesteuert durch Sprachkommandos, die vom Mikrofon 11 erfaßt werden, ein entsprechender Zugang zu den relevanten Dokumentationsdaten 1a, 1b hergestellt. Hierzu wird über die Funkschnittstelle 15 eine Datenverbindung zur Anlage A1..An oder einem entsprechenden Funk-Sende-Modul aufgebaut und die Daten an das AR-System 10 übermittelt. Im AR-System erfolgt eine situationsgerechte Auswertung der vom Anwender erhaltenen Daten und ein automatischer oder auch ein interaktiv vom Anwender gesteuerter Zugriff auf Inforamtionsdaten 1a, 1b. Die ermittelten relevanten Dokumentationsdaten 1a, 1b, werden über die Datenverbindungen 14, 15 an die Funk-Sende-Einrichtung 6 übermittelt und insgesamt erfolgt auf Basis der erfaßten Arbeitssituation somit eine Analyse, die Grundlage für die Auswahl von Daten aus der vorliegenden statischen Information ist. Hierdurch ergibt sich eine situationsgerechte, objektorientierte bzw. bauteilorientierte Auswahl relevanten Wissens aus den aktuellsten Datenquellen 1a, 1b. Die Anzeige der Information erfolgt mit Hilfe der jeweils verwendeten Visualisierungskomponente, beispielsweise einem Hand...... -PC oder einer Datenbrille. Von AR-basierten Technologien gesprochen wird. Der Anwender vor Ort wird somit lediglich mit der Information versorgt, die er braucht. Diese Information befindet sich jeweils auf dem aktuellsten Stand. Der Servicetechniker wird beispielsweise nicht durch ein "100 Seiten-Manual" mit Informationen überfrachtet.

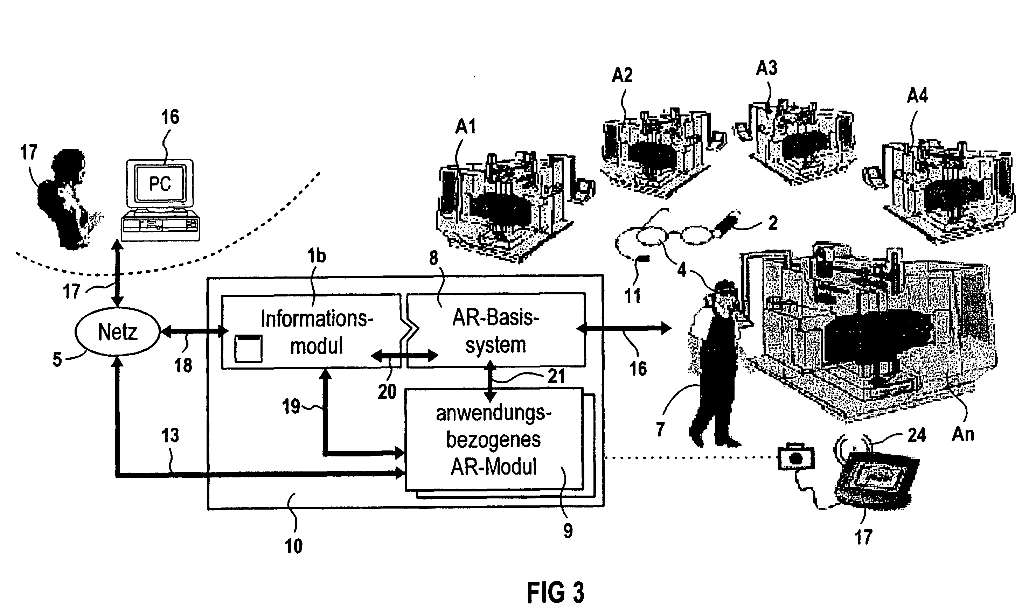

Figur 3 zeigt ein weiteres Anwendungsbeispiel eines Systems zur Dokumentationsverarbeitung für Service und Wartung. Das System besteht aus einem Augmented-Reality-System 10, welches ein Informationsmodul 1b zur Speicherung von Informationsdaten, ein AR-Basissystem 8 sowie ein AR-Anwendungsmodul 9 enthält. Das AR-System 10 ist über Bindungsleitungen 13, 18 ans Internet 5 ankoppelbar. Von dort besteht über eine beispielhafte Datenverbindung 12 eine Verbindungsmöglichkeit zu einem entfernten PC 16 mit einem entfernten Experten 22. Die Kopplung zwischen den einzelnen Modulen des AR-Systems 10 erfolgt über Verbindungen 19, 20, 21. Die Anwenderkommunikation zwischen einem Anwender 7 und dem AR-System erfolgt über Schnittstellen 8, 23. Hierzu ist das AR-System mit einer Sende-Empfangs-Vorrichtung koppelbar, die eine bidirektionale Datenkommunikation zwischen dem AR-System 10 und dem Anwender 7 über eine Datenbrille 4 entweder direkt über die Schnittstelle 8 oder über ein im Bereich des Anwenders 7 angeordnete Funk-Sende-Empfangseinrichtung 17 über eine Schnittstelle 23 ermöglicht. Die Verbindung 23 kann über eine separate Datenverbindung oder über das Stromnetz als "Power-Line"-Modem realisiert werden. Die Datenbrille 4 enthält neben einer im Bereich der Brillengläser angeordneten Anzeigevorrichtung eine Bilderfassungsvorrichtung 2 in Form einer Kamera sowie ein Mikrofon 11. Der Anwender 7 kann sich mit Hilfe der Datenbrille 4 im Bereich der Anlagen A1..An bewegen und Service- oder Wartungsarbeiten durchführen.

Mit Hilfe der Datenbrille 4 und der entsprechenden Funk-Sende-Empfangsvorrichtungen, beispielsweise der Funk-Sende-Empfangsvorrichtung 17, die vom Personal direkt am Körper getragen wird, ist es möglich vorbeugende Funktionalität zu erreichen: Zunächst erfolgt die Erfassung der jeweiligen Arbeitssituation, beispielsweise durch die Kamera 2 oder durch Lokalisierung durch das Personal 7. Auf Basis der erfaßten Arbeitsssituation erfolgt im AR-System eine Auswahl von Daten gewarteten Anlage A1..An. Der grundlegende Vorteil des in Figur 3 dargestellten Systems besteht darin, daß dieses System das Zusammenwirken der einzelnen Einzelfunktionalitäten anwendungsgerecht unterstützt: So wird zunächst eine konkrete Arbeitssituation automatisch erfaßt, diese Arbeitssituation anschließend analysiert, wobei aus der aktuellsten, vorliegenden statischen Information in Kombination mit den augenblicklich erfaßten dynamischen Daten automatisch die gerade relevanten Aspekte ermittelt werden. Hierdurch werden beispielsweise Montagehinweise mit aktuellen Prozeßdaten korreliert. Das Personal 7 erhält hierdurch eine situationsgerechte Anzeige der relevanten Informationen beispielsweise durch eine überlagerte Visualisierung der entsprechenden Daten in der Weise, daß im Sichtfeld des Personals die reale Arbeitssituation um die ermittelten Informationen erweitert wird. Hierdurch wird das Personal 7 in kürzester Zeit handlungsfähig gemacht und damit notwendige Maschinenlaufzeiten gesichert. Unterstützung kann der Wartungstechniker 7 vor Ort auch über den entfernten Experten 22 und das am Ort des entfernten Experten 22 vorliegende Wissen 16 erhalten.

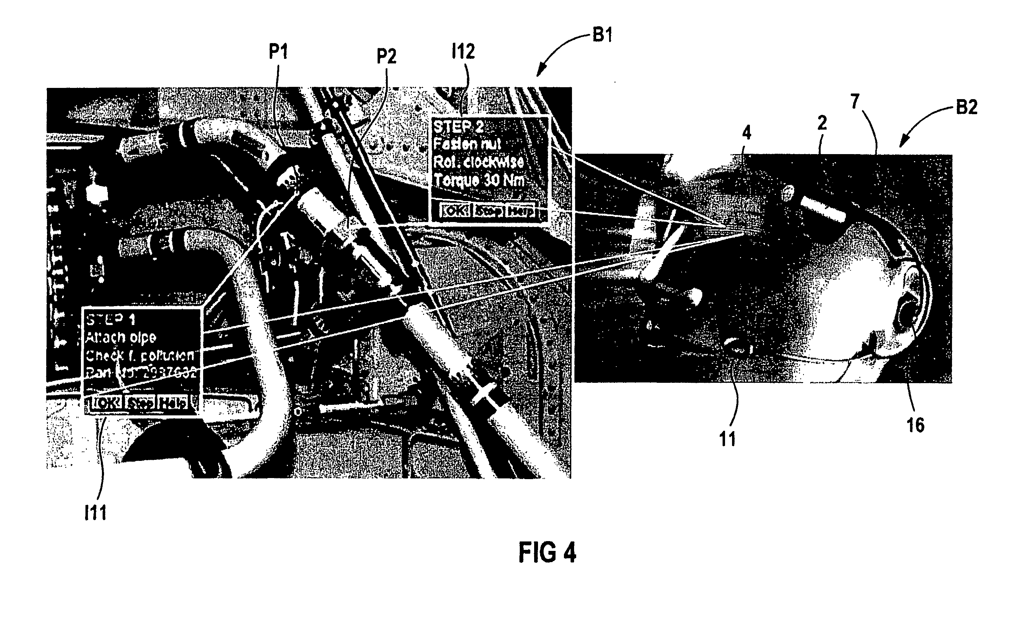

Figur 4 zeigt ein Anwendungsbeispiel für einen situationsgerechten Zugriff auf Dokumentationsdaten. Figur 4 zeigt einen ersten Bildschirmbereich B1, in dem eine Anlagenkomponente dargestellt ist. Im rechten Bildschirmbereich B2 ist ein Anwender 7 dargestellt, der beispielsweise eine einzelne Anlagenkomponente betrachtet. Der Anwender 7 ist mit einer Datenbrille 4 augerüstet, die eine Kamera 2 als Erfassungsmittel enthält. An der Datenbrille 4 ist darüber hinaus ein Mikrofon 11 sowie ein Lautsprecher 16 angeordnet. Im linken Bildschirmbereicht B1 ist ein Blick auf Rohrleitungen dargestellt, die mit der im Bildfenster B2 dargestellten Datenbrille betrachtet werden können. Im linken Bildschirmbereich B1 sind zwei Punkte B1, B2 markiert, die jeweils zwei mit Hilfe der Datenbrille 4 betrachtete Bildausschnitte repräsentieren. Nach Betrachtung des ersten Punkts P1, d.h. nach Betrachtung der im Bereich des Punktes P1 angeordneten Rohrleitung werden dem Anwender 7 Zusatzinformationen in der Datenbrille 4 visualisiert. Diese Zusatzinformationen 11 bestehen aus Dokumentationsdaten, die bezüglich des ersten Punktes P1 Arbeitsanweisungen für dieses Rohrstück enthalten und bezüglich des Punktes P2 die in einem zweiten Schritt durchzuführende Installationsanweisung beinhalten. Die Installationsanweisung besteht in diesem Fall darin, daß dem Anwender 7 das Drehmoment und die Drehrichtung der Schraubverbindung des Punktes P2 über die Visualisierung der Zusatzdaten I12 mitgeteilt werden. Der Anwender 7 erhält somit innerhalb kürzester Zeit eine situationsgerechte Anweisung für das betrachtete Objekt. Bei der Verwendung eines intelligenten Werkzeugs, welches in der Lage ist, das gerade eingesetzte Drehmoment zu erfassen, ist es weiterhin möglich, daß der Anwender basierend auf dem aktuellen Drehmoment auch dazu aufgefordert wird, daß Drehmoment entsprechend zu erhöhen oder zu verringern.

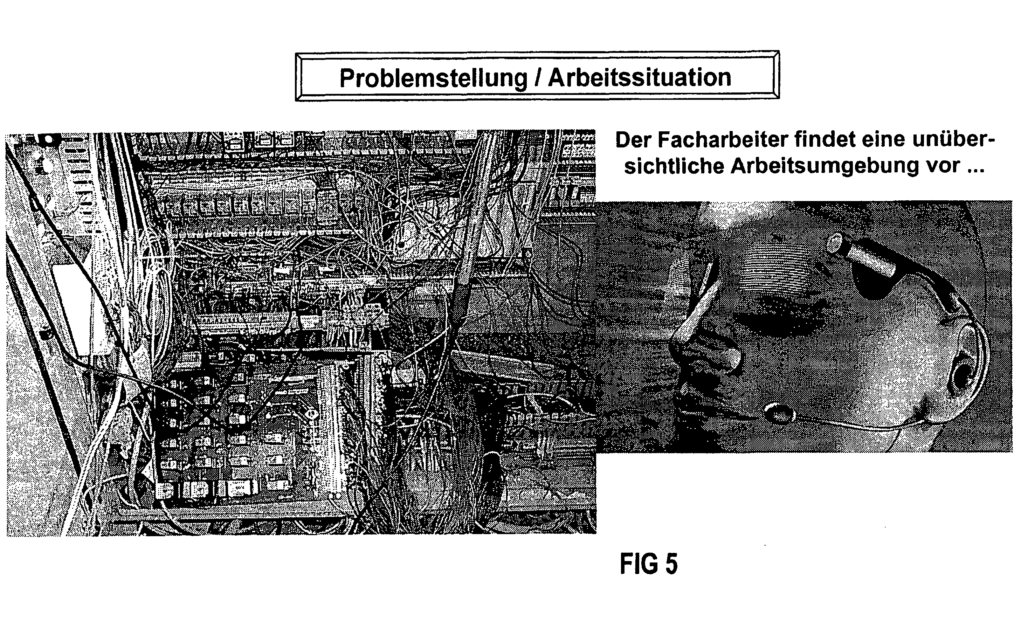

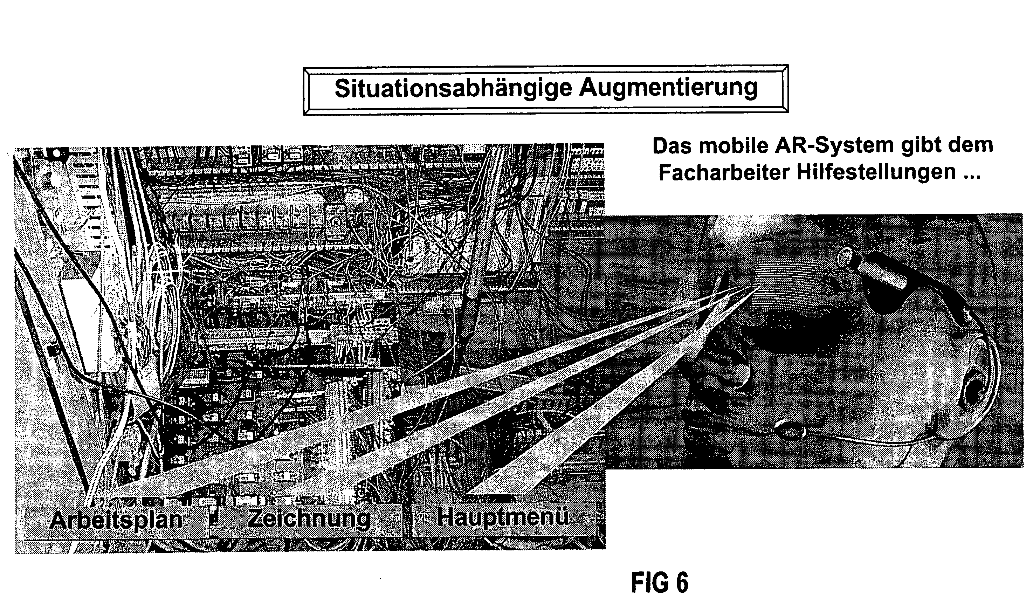

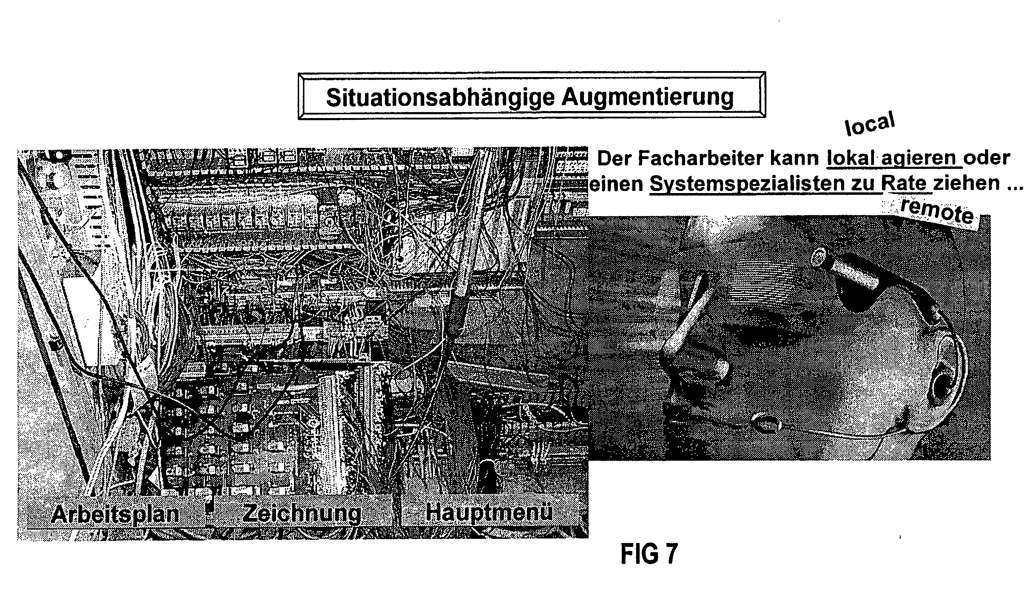

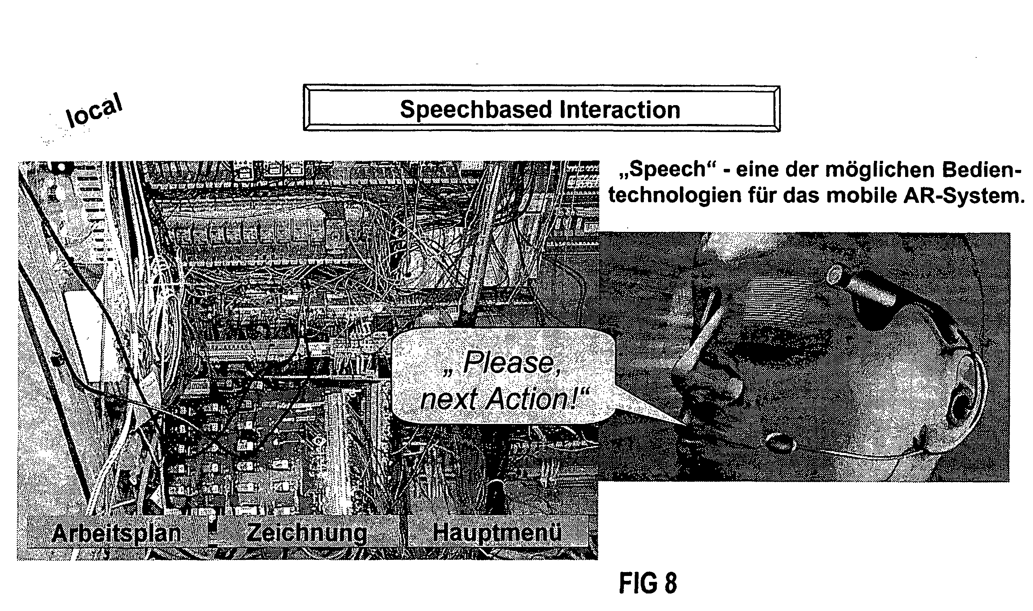

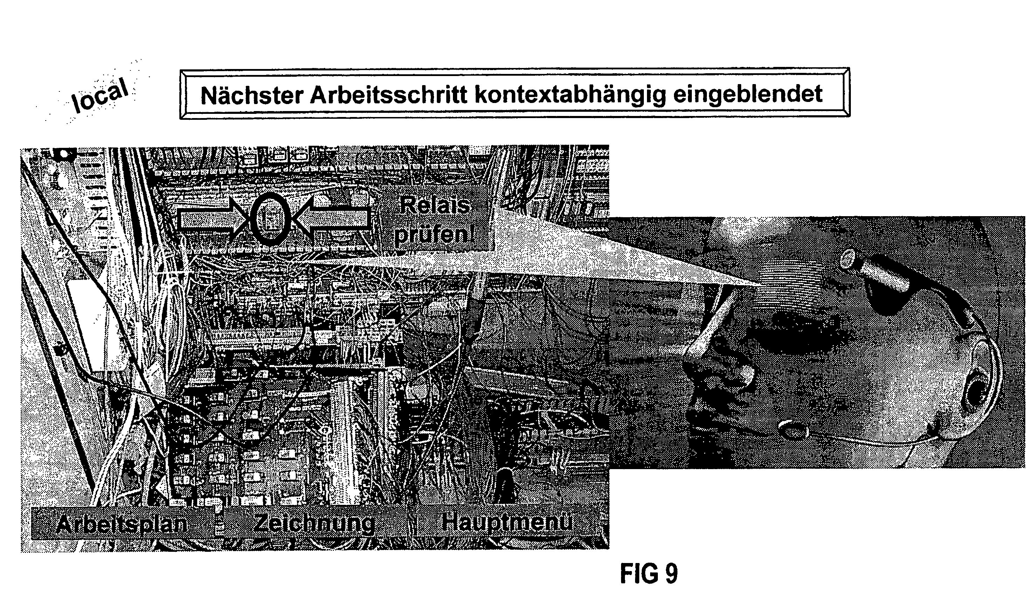

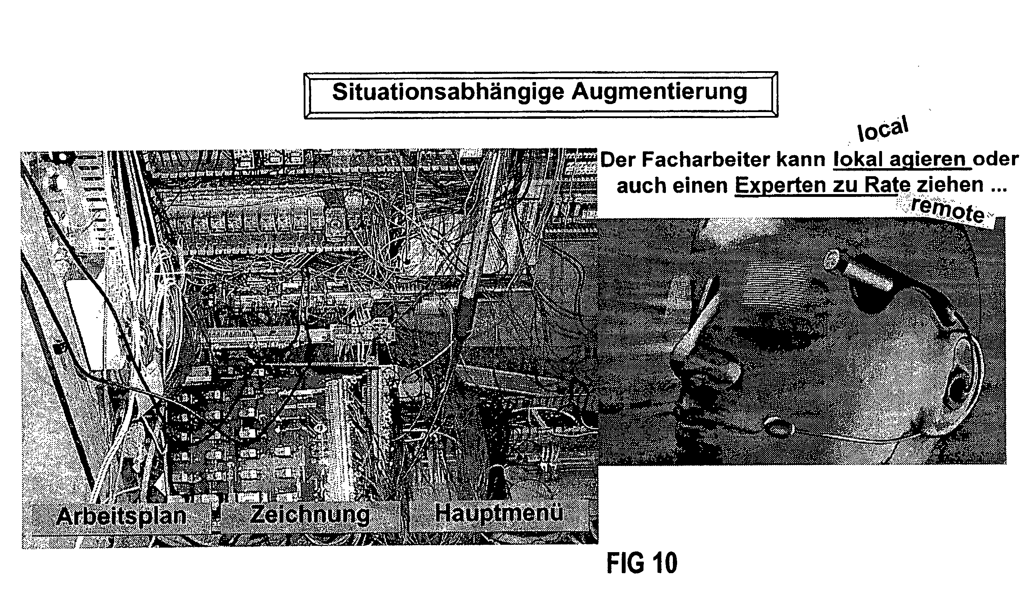

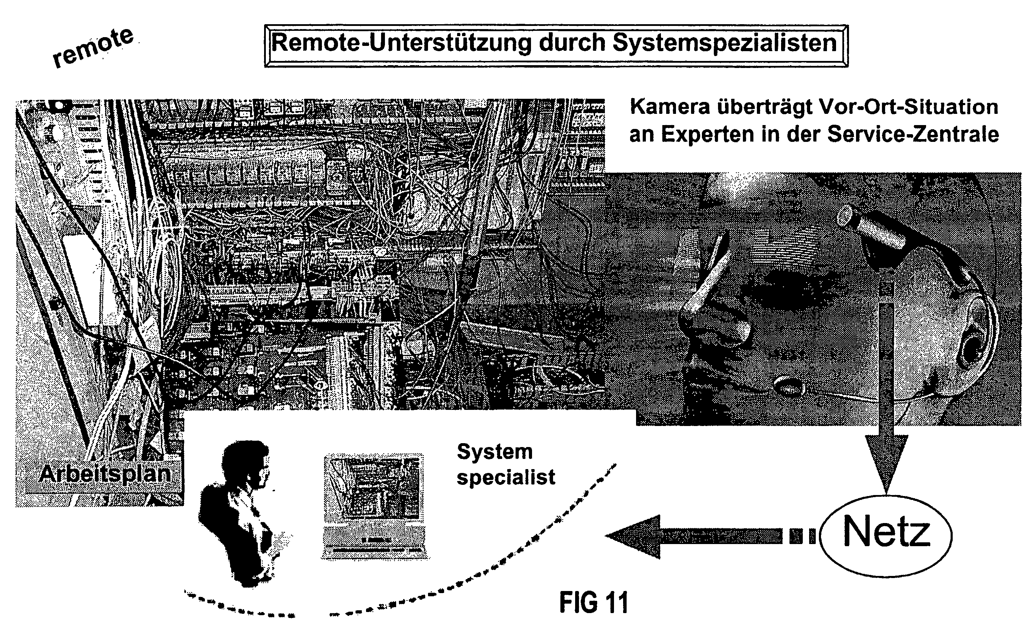

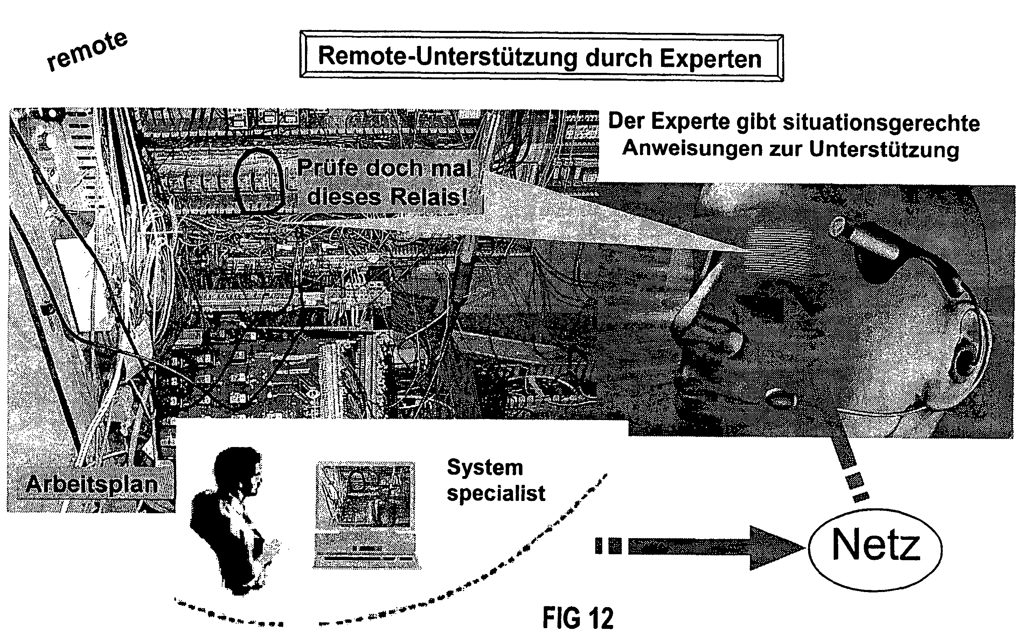

Fig. 5 bis Fig. 12 zeigen jeweils Situationsdarstellungen eines Anwendungsbeispiels zur objektorientierten Markierung und Zuordnung von Information zu selektierten technologischen Komponenten. Dabei sei ein Störfall in einer Anlage oder sonstigen technischen Einrichtung gegeben (vgl. Fig. 5). Ein DV-technisch vorhandenes Störfallmanagement lokalisiert mögliche Maschinenkomponenten, die das vorliegende Problem eingrenzen (vgl. Fig. 6, 7). Der Werker/Servicemitarbeiter - ausgestattet mit einem mobilen AR-System zur Unterstützung seiner Tätigkeit - äußert eine Vermututng z.B. dadurch, dass er mit dem Finger auf mögliche Problemzonen zeigt und/oder z.B. dadurch, dass es dies sprachlich unterstützt ("... diese Baugruppe könnte defekt sein", vgl. Fig. 8)). So hinterlässt beispielsweise der Finger am technologischen Objekt (z.B. der genannten Baugruppe) eine virtuelle Markierung (vgl. Kreis in Fig. 9), die fortan für den remote- Systemspezialisten (ein Experte in einer Servicezentrale) und dem Werker / Servicemitarbeiter vor Ort sichtbar bleibt. Beispielsweise sieht der Systemspezialist die Situation auf einem Monitor (Fig. 11), der das per Kamera und Datenleitung übertragene Videobild visualisiert. Der Werker hat seine Visualisierung vor Ort in einem "mobilen Monitor" (beispielsweise Headmounted Display, "Datenbrille" oder Handheld). Der Remote Systemspezialist kommentiert die vom Werker vorgeschlagenen Problemzonen durch Sprache und weitere Information (wie Markierungen, zussätzliche Texte oder Diagramme, vgl. Fig. 12): Diese "Augmentierung" erfolgt durch Markieren durch eingeblendete, objektgebundene Darstellung (Text, Bild, Mehrebenen Information - "Blick hinter das Objekt"). Die Zusatzinformation/ Augmentierung ist sodann insbesondere für den Werker sichtbar mit visuellem Bezug zu dem relevanten technologischen Objekt (vgl. Fig. 12 "Prüfe doch mal dieses Relais").

Wesentlicher Bestandteil der Erfindung ist somit eine objektorientierte virtuelle Markierung und Zuordnung von Information an optisch erfasste, reale technologische Komponenten, insbesondere zur Unterstützung für das kooperative Arbeiten von Werkern mit remote verfügbaren Systemspezialisten. Die Erfindung versteht sich insbesondere im speziellen Kontext der Anwendungsfelder "Produktions- und Werkzeugmaschinen" (NC-gesteuerte, automatisierungstechnische Prozesse) sowie "Diagnose-/Serviceunterstützungssysteme für komplexe technische Komponenten/Geräte/Systeme" (z.B. Fahrzeuge, aber auch industrielle Maschinen und Anlagen).

Insbesondere in den Phasen Produktion, Inbetriebsetzung und Service (Diagnose, Wartung, ...) genügen herkömmliche Technologien kaum mehr, um die komplexen Vorgänge- und Bearbeitungsprozeduren zu unterstützen. Mit Bezug auf kooperative Arbeit fehlen effiziente technische Möglichkeiten zur Bearbeitung verteilter Problemlösungen, bei denen ein räumlich entfernter Systemspezialist mit dem Mitarbeiter/Werker vor Ort über globale Distanzen hinweg kommuniziert. Dieser Fall ist besonders für überwiegend mittelständische Werkzeugmaschinenhersteller relevant. Sie sind durch die Globalisierung gezwungen, Produktionsstätten ihrer Kunden weltweit zu errichten. Jedoch ist eine Präsenz von Niederlassungen in allen wichtigen Märkten weder aus wirtschaftlichen Gründen realisierbar, noch kann auf das profunde Wissen erfahrener Service-Mitarbeiter des Stammhauses bzgl. der zunehmend komplexer werdenden Anlagen verzichtet werden.

Die Erfindung betrifft die Möglichkeit, "virtuelle Markierungen" an optisch erfassten, realen technischen Komponenten vorzunehmen. Diese "Markierungen" (=Objektidentifikationen) erfolgen durch, aus Benutzersicht intuitiv einsetzbare Interaktionstechniken wie z.B. Gestik und Sprache.

Bisherige eher händische Lösungsansätze werden dadurch überflüssig oder zumindest erheblich erleichtert. Solche bisherigen Lösungsansätze bestanden beispielsweise in einer verbalen Kommunikation zur situativen Beschreibung von Arbeitssituationen bzw. fernmündliche Hinweise zur Unterstützung bei der Bearbeitung von gegebenen Aufgabenstellungen.

Bei der durch die Fig. 5 bis 12 vorgesehenen Vorgehensweise kommt als Besonderheit eine Mensch-Technik-Interaktion durch Augmented Reality zum Einsatz mit einer sehr einfachen und intuitiven Kommunikation mit dem Computer, beispielsweise ergänzt durch multimodale Interaktionstechniken wie Sprachverarbeitung oder Gestikerkennung.

Identifikation technologischer Objekte mit Methoden der Bilderkennung (durch analytische Bildverarbeitung) in optisch erfassten und dokumentierten realen Arbeitssituationen, wobei die "Markierung", d.h. Identifikation von relevanten technologischen Objekten, beispielsweise durch den Werker (=Anwender) erfolgt mittels mutlimodalen Interaktionsmethoden wie z.B. Gestikerkennung u.U. zusammen mit Spracherkennung. Eine Markierung bleibt dem technologischen Objekt zugeordnet und kann auch analog zur Unterstützung durch "remote" verfügbaren Systemspezialisten verwendet werden.

Das wesentliche Neue und Besondere liegt dabei in der Markierung durch den Werker, in der Bindung der Markierung an Objekt sowie ggf in der Markierung und Augmentierung durch remote Systemspezialisten.

Zusammenfassend betrifft die Erfindung somit System und ein Verfahren zur objektorientierten Markierung und Zuordnung von Information zu selektierten technologischen Komponenten. Für eine optimierte Unterstützung insbesondere bei der Wartung von Automatisierungssystemen wird ein System zur objektorientierten Markierung und Zuordnung von Information zu selektierten technologischen Komponenten zur situationsgerechten Unterstützung der Interaktion zwischen einem Anwender und einer technischen Vorrichtung, insbesondere für technische und industrielle Anwendungen vorgeschlagen. Das System umfaßt Speichermittel zur Speicherung von Dokumentationsdaten und mit Erfassungsmitteln zur Erfassung von realen Informationen, Zugriffsmittel zum Zugriff auf die Dokumentationsdaten, Auswertemittel zur Auswertung der realen Information und zur Auswahl der gespeicherten Dokumentationsdaten in Abhängigkeit der realen Informationen, mit Mitteln zur virtuellen Markierung einer technologischen Komponente und mit Mitteln zur Darstellung Zusatzinformationen, die im Zusammenhang mit der durch die virtuelle Markierung selektierten technologischen Komponente stehen.

## Patentansprüche

1. System zur objektorientierten Markierung und Zuordnung von Information zu selektierten technologischen Komponenten zur situationsgerechten Unterstützung der Interaktion zwischen einem Anwender (7) und einer technischen Vorrichtung (A1..An), mit Speichermitteln (1) zur Speicherung von Dokumentationsdaten (I1..In) und mit Erfassungsmitteln (2) zur Erfassung von realen Informationen (R), mit Zugriffsmitteln (D) zum Zugriff auf die Dokumentationsdaten (I1..In), mit Auswertemitteln (A) zur Auswertung der realen Information (R) und zur Auswahl der gespeicherten Dokumentationsdaten (I1..In) in Abhängigkeit der realen Informationen (R), mit Mitteln zur virtuellen Markierung einer technologischen Komponente, wobei die Markierung durch den Anwender mittels multimodaler Interaktionsmethoden erfolgt und mit Mitteln zur Darstellung von Zusatzinformationen für den Anwender, die im Zusammenhang mit der durch die virtuelle Markierung selektierten technologischen Komponente stehen.

2. System nach Anspruch 1,
**dadurch gekennzeichnet,**
**daß** die Mittel zur virtuellen Markierung durch Sprachsteuerung und/oder durch digitale Bildverarbeitung angesteuert werden.

3. System nach einem der Ansprüche 1 oder 2,
**dadurch gekennzeichnet,**
**daß** das System am Ort des Anwenders (7) ein Augmented-Reality-System aufweist, das über eine Datenverbindung mit einem entfernten Experten und/oder einem entfernten Expertensystem zur Hinübertragung der Markierung und/oder zur Rückübertragung von Zusatzinformationen, die im Zusammenhang mit der durch die virtuelle Markierung selektierten technologischen Komponente stehen, verbindbar ist.

4. Verfahren zur objektorientierten Markierung und Zuordnung von Information zu selektierten technologischen Komponenten zur situationsgerechten Unterstützung der Interaktion zwischen einem Anwender (7) und einer technischen Vorrichtung (A1..An), bei dem Dokumentationsdaten (I1..In) gespeichert werden und reale Informationen (R) mit Erfassungsmitteln (2) erfaßt werden, bei dem auf die Dokumentationsdaten (I1..In) in der Weise zugegriffen wird, daß die realen Informationen (R) ausgewertet werden und in Abhängigkeit der realen Informationen (R) die gespeicherten Dokumentationsdaten (I1..In) ausgewählt werden, wobei an einer zu selektierenden technologischen Komponente eine virtuelle Markierung durch den Anwender mittels multimodaler Interaktionsmethoden angebracht wirdund dem Anwender zu der durch die virtuelle Markierung selektierten technologischen Komponente zugehörige Zusatzinformationen dargestellt werden.

5. Verfahren nach Anspruch 4,
**dadurch gekennzeichnet,**
**daß** die virtuelle Markierung sprachbasiert und/oder durch digitale Bildverarbeitung angebracht wird.

6. Verfahren nach einem der Ansprüche 4 oder 5,
**dadurch gekennzeichnet,**
**daß** vom Ort des Anwenders (7) von einem Augmented-Reality-System über eine Datenverbindung mit einem entfernten Experten und/oder einem entfernten Expertensystem eine Hinübertragung der Markierung erfolgt und/oder eine Rückübertragung von Zusatzinformationen, die im Zusammenhang mit der durch die virtuelle Markierung selektierten technologischen Komponente stehen.

## Claims

1. System for object-oriented marking and assignment of information to selected technological components for situation-based support for interaction between a user (7) and a technical device (A1..An), having storage means (1) for storing documentation data (I1..In) and recording means (2) for recording real information (R), access means (D) for accessing documentation data (I1..In), evaluation means (A) for evaluating the real information (R) and selecting the stored documentation data (I1..In) as a function of the real information (R), means for virtual marking of a technological component, whereby the marking is performed by the user using multi-modal interaction methods, and means for displaying additional information for the user related to the technological component selected by the virtual marking.

2. System according to Claim 1, **characterised in that** the virtual marking means are controlled by speech and/or by digital image processing.

3. Maintenance system according to one of Claims 1 or 2, **characterised in that** the system at the location of the user (7) has an augmented reality system which can be connected via a data link to a remote expert and/or a remote expert system to transmit the marking and/ or return additional information related to the technological component selected by the virtual marking.

4. Method for object-oriented marking and assignment of information to selected technological components for situation-based support for interaction between a user (7) and a technical system (A1..An), in which documentation data (I1..In) is stored and real information (R) is recorded using recording means (2), in which documentation data (I1..In) is accessed such that the real information is analysed and the stored documentation data (I1..In) is selected as a function of the real information (R), whereby a virtual marking is applied by the user using multi-modal interaction methods to a technological component to be selected and additional information related to the technological component selected by the virtual marking is displayed for the user.

5. Method according to Claim 4, **characterised in that** the virtual marking is based on speech and/or is applied based on digital image processing.

6. Method according to one of Claims 4 or 5, **characterised in that** the marking is transmitted and/or additional information related to the technological component selected by the virtual marking is returned from the location of the user (7) by an augmented reality system via a data link to a remote expert and/or a remote expert system.

## Revendications

1. Système de marquage orienté objet et d'affectation d'informations à des composants technologiques sélectionnés en vue de l'assistance, adaptée à la situation, de l'interaction entre un utilisateur (7) et un dispositif technique (A1 à An), avec des mémoires (1) pour mémoriser des données documentaires (I1 à In) et avec des moyens d'acquisition (2) pour acquérir des informations réelles (R), avec des moyens d'accès (D) pour accéder aux données documentaires (I1 à In), avec des moyens d'évaluation (A) pour évaluer l'information réelle (R) et pour sélectionner les données documentaires mémorisées (I1 à In) en fonction des informations réelles (R), avec des moyens pour marquer virtuellement un composant technologique, le marquage étant effectué par l'utilisateur au moyen de méthodes interactives multimodales, et avec des moyens pour présenter à l'utilisateur des informations supplémentaires qui sont en relation avec le composant technologique sélectionné par le marquage virtuel.

2. Système selon la revendication 1,
**caractérisé par le fait que** les moyens destinés au marquage virtuel sont contrôlés par une commande vocale et/ou par un traitement numérique d'image.

3. Système selon l'une des revendications 1 ou 2,
**caractérisé par le fait que** le système comporte sur le lieu de séjour de l'utilisateur (7) un système à réalité amplifiée qui peut être relié par l'intermédiaire d'une liaison de données à un expert distant et/ou à un système expert distant pour la transmission, à l'aller, du marquage et/ou pour la transmission, au retour, des informations supplémentaires qui sont en relation avec le composant technologique sélectionné par le marquage virtuel.

4. Procédé de marquage orienté objet et d'affectation d'informations à des composants technologiques sélectionnés en vue de l'assistance, adaptée à la situation, de l'interaction entre un utilisateur (7) et un dispositif technique (A1 à An), dans lequel on mémorise des données documentaires (I1 à In) et on acquiert des informations réelles (R) avec des moyens d'acquisition (2), dans lequel on accède aux données documentaires (I1 à In) de telle sorte qu'on évalue les informations réelles (R) et on sélectionne en fonction des informations réelles (R) les données documentaires (I1 à In) mémorisées, un marquage virtuel sur un composant technologique à sélectionner étant effectué par l'utilisateur au moyen de méthodes interactives multimodales et des informations supplémentaires qui appartiennent au composant technologique sélectionné par le marquage virtuel étant présentées à l'utilisateur.

5. Procédé selon la revendication 4,
**caractérisé par le fait que** le marquage virtuel est appliqué sur la base de paroles et/ou d'un traitement numérique d'image.

6. Procédé selon l'une des revendications 4 ou 5,
**caractérisé par le fait que**, sur le lieu de séjour de l'utilisateur (7), un système à réalité amplifiée met en oeuvre par l'intermédiaire d'une liaison de données avec un expert distant et/ou avec un système expert distant une transmission, à l'aller, du marquage et/ou une transmission, au retour, des informations supplémentaires qui sont en relation avec le composant technologique sélectionné par le marquage virtuel.
